# EUROPEAN PATENT SPECIFICATION

(11) **EP 2 003 919 B1**
(45) Date of publication and mention of the grant of the patent: **28.08.2013**
(21) Application number: 07721056.5
(22) Date of filing: 30.04.2007
(51) Int. Cl.: H04W 60/06, H04W 60/04

(54) **METHOD FOR THE TERMINALS IN WIRELESS MAN TO ENTER IDLE MODE**
VERFAHREN FÜR ENDGERÄT IN EINEM DRAHTLOSEN MAN ZUM EINTRETEN IN DEN RUHEMODUS
PROCÉDÉ PERMETTANT À UN TERMINAL D'ENTRER EN MODE DE REPOS DANS UN RÉSEAU MÉTROPOLITAIN SANS FIL

(30) Priority: 30.04.2006 CN 200610075195; 19.06.2006 CN 200610094433
(43) Date of publication of application: 17.12.2008
(73) Proprietor: Huawei Technologies Co., Ltd., Longgang District, Shenzhen Guangdong 518129 (CN)
(72) Inventor: XIE, Yong, Shenzhen, Guangdong 518129 (CN); WU, Jianjun, Shenzhen, Guangdong 518129 (CN)
(74) Representative: Körber, Martin Hans
(86) International application number: PCT/CN2007/001483
(87) International publication number: WO 2007/128240

(56) References cited:
- WO-A1-2006/001673
- WO-A1-2007/056514
- US-A1- 2005 250 474
- US-A1- 2006 025 134
- WIMAX FORUM: "WiMAX End-to-End Network Systems Architecture - (Stage 2: Architecture Tenets, Reference Model and Reference Points) - December 15, 2005 DRAFT" WIMAX FORUM, XX, XX, 15 December 2005 (2005-12-15), pages 1-242, XP002442962
- IEEE: "Part 16: Air Interface for Fixed and Mobile Boradband Wireless Access Systems. Amendment for Physical and Medium Access Control Layers for Combined Fixed and Mobile Operation in Licensed Bands, 802.16e D12" DRAFT IEEE STANDARD FOR LOCAL AND METROPOLITAN AREA NETWORKS,, [Online] no. P802.16E/D12, 14 October 2005 (2005-10-14) , pages 1,69-72,209, XP002505286 Retrieved from the Internet: URL:http://www.ieee802.org/16> [retrieved on 2008-11-24]
- ANONYMOUS ED - ANONYMOUS: "IEEE Standard for Local and metropolitan area networks Part 16: Air Interface for Fixed and Mobile Broadband Wireless Access Systems Amendment 2: Physical and Medium Access Control Layers for Combined Fixed and Mobile Operation in Licensed Bands and Corrigendum 1; IEEE Std 802.16e-2005 and IEEE Std" 1 January 2006 (2006-01-01), IEEE STANDARD; [IEEE STANDARD], IEEE, PISCATAWAY, NJ, USA, PAGE(S) _1 - 822 , XP017601713 ISBN: 9780738148564 * paragraphs [6.3.2.3.26], [6.3.2.3.42], [6.3.24.1] *

## Description

### FIELD OF THE INVENTION

The present invention relates to the wireless Metropolitan Area Network (MAN) technology, and in particular, to a method for enabling a Mobile Station (MS) to enter the idle mode in a wireless MAN.

### BACKGROUND

The idle mode is a working mode of a terminal in a mobile broadband Radio Access System (RAS). In the idle mode, an MS can move in a set area, and receive the downlink broadcast service messages at regular intervals. The downlink broadcast service messages are designed to notify the MS whether any downlink service needs to be transmitted. While roaming in an area, an MS does not need to get registered on the Base station (BS) of the cell where the MS is roaming. Meanwhile, while roaming in different cells, the MS does not need to perform normal operation processes such as handover, which is conducive to saving MS power and air interface resources.

Multiple BSs make up a group, called Paging Group (PG). A PG is intended to constitute a continuous area, inside which the MS does not need to send uplink services but can use downlink paging channels to judge whether any downlink service is sent to the MS. On one hand, a PG must be large enough to ensure that most MSMS are kept in the same PG in a long time; on the other hand, a PG must be small enough to ensure that the overhead spent by the PG for paging an MS is reasonable.

In the normal operation process on a Serving BS (SBS), the MS may request to enter the idle mode by sending a message. Likewise, an SBS may require an MS to enter the idle mode by sending a message. No matter whether the MS requests to enter the idle mode through a message or the SBS requires the MS to enter the idle mode through a message, the MS must finish deregistration and enter the idle mode within the specified time.

Taking a Worldwide Interoperability for Microwave Access (WiMAX) system as an example, the WiMAX standard currently under development defines a paging reference model in the idle mode, in which the Paging Controller (PC) is a network entity that controls the activities of an MS in the idle mode. The PC is a logic entity in the current WiMAX network architecture. Since a PC needs to send paging messages according to the PG that currently contains the MS, a Location Register (LR) is required to store the state information, paging information, and service flow information of the MS. Generally, each LR logic entity corresponds to one PC logic entity, and two logic entities work in the same physical Network Element (NE). PCs can be divided into the following two types:
(i) anchor PC: each MS in the idle mode uniquely corresponds to an anchor PC which controls the actions of the MS in the idle mode and controls the relevant processes;
(ii) relay PC: one idle MS may have one or more relay PCs for communicating with the anchor PC. For different MSs, a PC may act as both anchor PC and relay PC.

Generally, a Paging Agent (PA) located in a BS is designed to handle paging and the functions related to the idle mode.

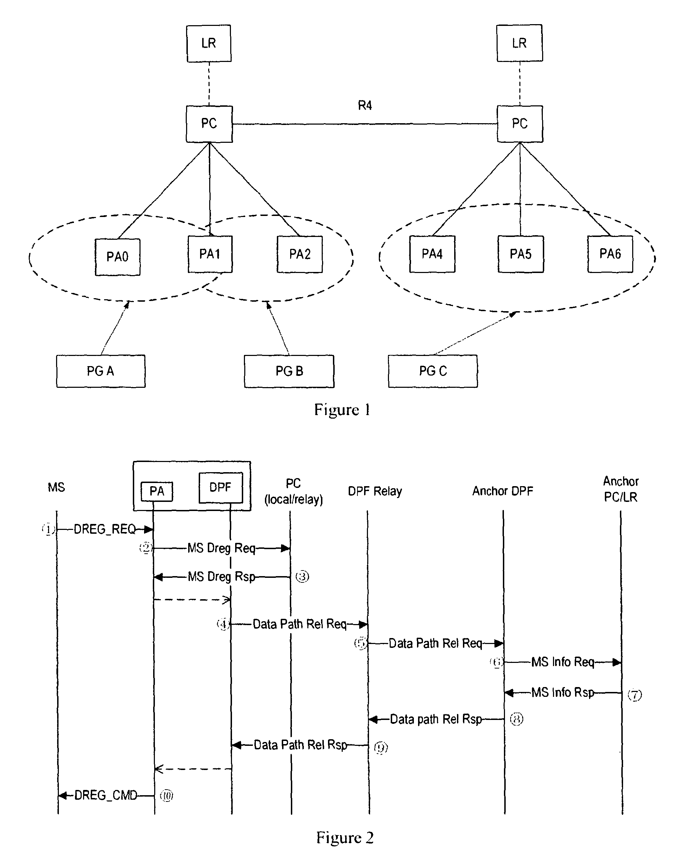

A WiMAX paging reference model is taken as an example, regardless of other physical NEs and logic entities in the WiMAX network, the following description is based on the WiMAX paging reference model as shown in Figure 1.

According to the paging reference model as shown in Figure 1, when an MS requests to enter the idle mode on the SBS or the SBS instructs the MS to enter the idle mode, message interaction will be performed between the MS and SBS and between the SBS and the back-end NE "ASN GW" to notify the PC that the MS enters the idle mode (this is implemented in the ASN GW). The state information, paging information, and service flow information of the MS are saved in the corresponding LR.

Figure 2 shows the process of entering the idle mode initiated by an MS in the prior art. As shown in Figure 2, the process is as follows:

The MS sends a deregistration request (DREG_REQ) to the PA/DPF (or PA/SBS; the DPF is located in the SBS); "/" in the Figure 2 means that the PA is bound to the DPF; the "/" hereinafter has the same meaning.

The local PC receives the DREG_REQ, specifies an anchor PC for the MS, allocates paging parameters for the MS to enter the idle mode, and then returns such information to the PA through an MS deregistration response, MS Dreg Rsp, message (steps ② and ③ in Figure 2).

The PA uses the functions of its Data Path Function (DPF) entity to send a Data Path Rel Req to the relay DPF on the MS link, in order to release the link on the MS. The relay DPF on the link forwards the Data Path Rel Req to the anchor DPF (steps ④ and ⑤ in Figure 2).

The anchor DPF sends an MS Info Req message to the anchor PC specified in the message.

After receiving the MS Info Req, the anchor PC contacts the anchor authenticator to authenticate whether to allow the MS to enter the idle mode, and replies with an MS information response, MS Info Rsp, message.

According to the MS Info Rsp, the anchor DPF sends a Data Path Rel Rsp to the PA/DPF if the MS is allowed to enter the idle mode.

After receiving the Data Path Rel Rsp, the PA/DPF confirms success of entering the idle mode, sends through the air interface a deregistration command (DREG_CMD) to the MS, and starts a resource retaining timer. When the timer times out, the PA/DPF deletes the local MS resources, thus finishing the process of entering the idle mode.

However, the inventor of the present invention discovers that the prior art has defects with respect to the process of entering the idle mode initiated by the MS; the SBS has to start a resource retaining timer and delete the local information on the MS when the timer times out. The prior art does not specify whether to notify the anchor PC to update data at this time, which impairs the stability of entering the idle mode.

Moreover, when the MS sends a request for entering the idle mode, it is possible that the network side requires the MS to enter the idle mode only after a delay of REQ-duration. However, the prior art does not consider such a circumstance of entering the idle mode initiated by an MS.

WiMAX FORUM: "End-to-End Network Systems Architecture (Stage 2: Architecture Tenets, Reference Model and Reference Points) discloses a method of entering the idle mode, in the method, when the BS receives DREG_REQ message from the MS, the BS triggers a data path release process. IEEE: "Part 16: Air Interface for Fixed and Mobile Broadband Wireless Access Systems Amendment for Physical and Medium Access Control Layers for Combined Fixed and Mobile Operation in Licensed Bands" discloses a DREG-REQ message format.

### SUMMARY

The present invention provides a method for enabling an MS to enter the idle mode in a wireless MAN, as disclosed in the appended claims, to perfect the process of the MS entering the idle mode and enhance the stability of the process.

Through the method for an MS to enter the idle mode in a wireless MAN, the present invention standardizes the process in which the anchor PC/LR updates data after the MS enters the idle mode successfully, and the process in which the network side requires the MS to enter the idle mode after a delay of REQ-duration, thus perfecting the process of entering the idle mode initiated by the MS and making such a process more complete and stable. Moreover, after the MS enters the idle mode, the anchor PC will initiate paging to the MS, or delete the context information of the MS, if the anchor PC receives no location update request from the MS before the idle mode timer times out. Besides, the present invention transfers and stores the paging interval length to the anchor PC, which facilitates the BS to determine the scheduling policy for paging.

### BRIEF DESCRIPTION OF THE DRAWINGS

Figure 1 shows a paging reference model of a WiMAX system in the prior art.

Figure 2 shows the process of entering the idle mode initiated by an MS in the prior art.

Figure 3 shows the process of entering the idle mode initiated by an MS according to a first embodiment of the present invention.

Figure 4 shows the process of entering the idle mode initiated by an MS according to a second embodiment of the present invention.

Figure 5 shows the process of entering the idle mode initiated by an MS according to a third embodiment of the present invention.

Figure 6 shows the process of entering the idle mode initiated by an MS according to a fourth embodiment of the present invention.

### DETAILED DESCRIPTION

The embodiments of the present invention arc hereinafter described in detail.

In the embodiments of the present invention, a WiMAX system is used as an example to expound the technical solution. However, the application scope of the technical solution of the present invention is not limited to the WiMAX system.

The MS may initiate a process of entering the idle mode in two circumstances:
(i) upon sending a request of entering the idle mode, the MS enters the idle mode directly without delay;
(ii) after sending a request of entering idle mode, the MS needs to wait for a period of time before entering the idle mode. The network replies to the MS in response to the request of entering the idle mode in view of the specific circumstance.

The previous two circumstances are elaborated hereinafter through the embodiments according to the present invention.

### Embodiment 1

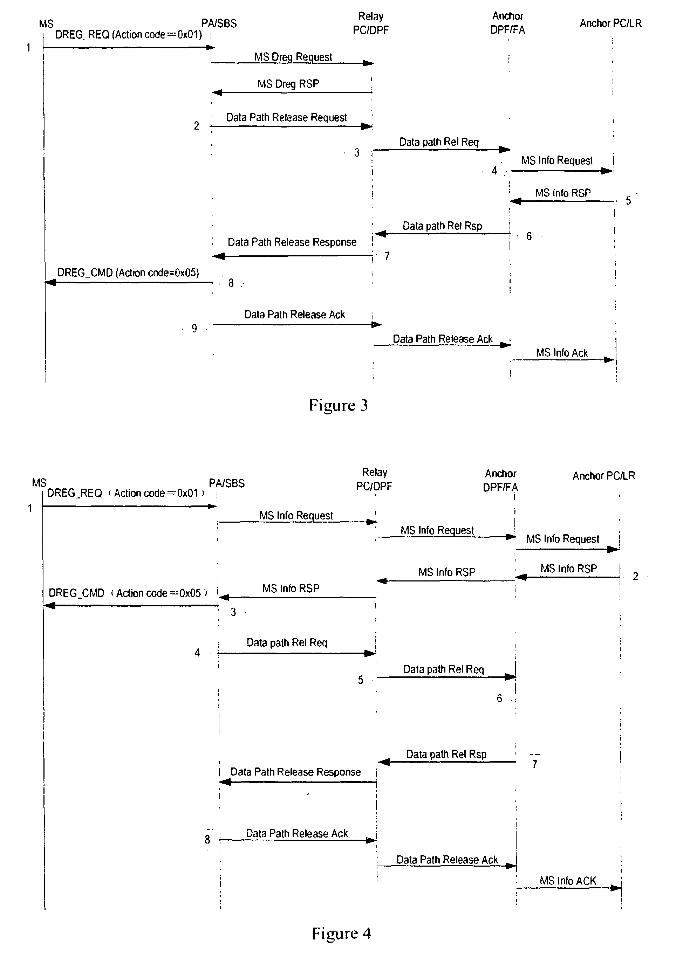

Embodiment 1 according to the present invention is detailed below with respect to the first circumstance mentioned above. Figure 3 shows the process of entering the idle mode initiated by an MS according to the first embodiment of the present invention. As shown in Figure 3, the process of entering the idle mode initiated by an MS of the present invention is as follows:
(1) when deciding to enter the idle mode, the MS sends a DREG_REQ message. In the DREG_REQ message, the Action Code is 0x01, indicating the requirement of entering the idle mode. The message format can be defined according to the existing standard. After receiving the DREG_REQ message, the SBS/PA sends an MS deregistration request (MS Dreg Req) message to its local PC (the local PC that manages the PA), with the message carrying the MS ID, BS ID, PG ID, Idle Mode Retain Information, and so on. After receiving the MS Dreg Rcq message, the local PC specifies an anchor PC for the MS, allocates the recommended paging parameters for the MS entering the idle mode (including PG ID, Paging Cycle, Paging Offset, PC ID (gateway ID of the anchor PC); and then returns such information to the SBS or PA through an MS deregistration response (MS Dreg Rsp) message;
(2) after receiving the MS Dreg Rsp message, the SBS/PA obtains the paging parameter information; through the DPF function, the SBS/PA sends a data path release request (Data Path Rel Req) message to the relay DPF on the MS link, requesting to release the link of this MS. The Data Path Rel Req message carries MS ID, Idle Mode Retain Information, BS ID, recommended paging parameters (PG ID, Paging Cycle, Paging Offset, PC ID), Access Service Network Data Path Function ID (ASN-DPF ID), and authenticator ID, which are context information parameters required for the MS to enter the idle mode;
(3) the relay DPF on the link forwards the Data Path Rel Req message to the anchor DPF (namely, the DPF located together with the FA);
(4) after receiving the Data Path Rel Req, the anchor DPF saves the corresponding information, and sends an MS information request, MS Info Req, message to the anchor PC specified in the Data Path Rel Req. The MS Info Req message carries the MS ID, Idle Mode Retain Information, BS ID, recommended paging parameters, Service Flow ID (SFID), and anchor authenticator ID;
(5) after receiving the MS Info Req message, the anchor PC knows that the MS requests to enter the idle mode according to the content of the message. At this time, the anchor PC contacts the anchor authenticator to check whether the MS is allowed to enter the idle mode. If the check result is that the MS is allowed to enter the idle mode, the anchor PC will reallocate the paging parameters according to the specific conditions (for example, the requirements on setting the parameter), and reply with an MS Info Rsp message. The message carries an MS ID, the actual paging parameters (including selected PG ID, Paging Cycle, Paging Offset), PC ID, and idle mode authorization indication. Meanwhile, the anchor PC requires the LR to retain the information on the MS. If the MS is not allowed to enter the idle mode according to the check result, the process is exceptional, and the anchor PC will reply with an MS Info Rsp message, indicating refusal of entering the idle mode;
(6) after receiving the MS Info Rsp, the FA replies with a data path release response (Data Path Rel Rsp) to the relay PC if the idle mode authorization indication allows the MS to enter the idle mode. The response message carries an MS ID, the actual paging parameters, a PGID, a PCID, and so on;
(7) the relay PC forwards the Data Path Rel Rsp to the BS/PA;
(8) after receiving the Data Path Rel Rsp, the BS/PA confirms that the MS enters the idle mode successfully, and replies, from the air interface, a deregistration command (DREG_CMD) message to the MS. The message carries an action code "0x05", which indicates successful location update. Meanwhile, the BS/PA starts a resource retaining timer, so that the information on the local MS will be deleted upon expiry of the resource retaining timer; and
(9) after receiving a Data Path Rel Rsp, the BS/PA sends a data path release acknowledgement (Data Path Rel Ack) message to the relay PC. The relay PC replies with a Data Path Rel Ack message to the FA, indicating that the MS enters the idle mode successfully. The relay PC deletes the information on the MS. Meanwhile, the FA sends an MS Info Ack message to the anchor PC, confirming completion of the MS entering the idle mode. The anchor PC finally finishes data update in the LR. Through the Data Path Rel Ack and the MS Info Ack, the context information of the MS is stored in the anchor PC/LR. In this step, the anchor PC/LR updates the data stored temporarily in step (5) to formal data, thus improving the stability of entering the idle mode. In this embodiment, when applied to process messages, the anchor PC/LR may be:
   (i) anchor PC and LR; or
   (ii) anchor PC. When applied to save information or update data, the anchor PC/LR may be: an anchor PC and/or an LR. In the subsequent embodiments, the same applies;
in this step, the BS/PA may send a Data Path Rel Ack message to the relay PC when the resource retaining timer times out; the relay PC replies with a Data Path Rel Ack message to the FA; and the FA sends an MS Info Ack message to the anchor PC to update the data. Further, the anchor PC needs to notify the anchor authenticator to update and retain the information on the MS idle state, including the anchor PCID, anchor DPF ID, and security context information.

In the process of the MS entering the idle mode in this embodiment, the process of storing the MS context information into the anchor PC is synchronous to the process of releasing the data path.

It should be noted that the relay PC is optional in the previous step. If the relay PC does not exist, the BS/PA will communicate with the FA directly.

The process of the MS entering the idle mode involves several relevant parameters such as Idle Mode Timeout, Paging Interval Length, and Paging Cycle Req. The MS Dreg Req message may carry one or more of the previous three parameters, so that the parameters are transferred and saved into the relay PC or the anchor PC.

Regarding the Idle Mode Timeout parameter, after the MS enters the idle mode, both the MS and the PC will start an idle mode timer at the MS side, and when the idle mode timer times out, the MS will initiate location update; or, in the PC, an idle mode system timer is started, and when the idle mode time out, the PC will initiate paging to the MS to require location update if the PC receives no location update request from the MS, or will delete the context information of the MS directly if the PC believes that the MS is off network. The Idle Mode Timeout parameter is used by the MS and the PC to set the previous timers, and is negotiated by the MS and the network side in the process of registering the MS with the network.

In the process of the MS entering the idle mode, the Idle Mode Timeout parameter must be transferred and saved into the anchor PC for setting the idle mode system timer. If the anchor PC is migrated when the MS is in the idle mode, the Idle Mode Timeout parameter also needs to be transferred to the new anchor PC.

For that purpose, the Idle Mode Timeout parameter needs to be transferred to the current network side during the handover, including the target BS. This parameter is negotiated in the process of registering the MS with the network; and the BS or serving network that serves the MS when the MS accesses the network may be different from the BS or serving network that serves the MS when the MS enters the idle mode later. Therefore, this parameter must be transferred together with the MS context during the handover of the MS.

Regarding the Paging Interval Length parameter, according to the paging cycle and the paging offset, it is practicable to calculate the specific radio frame (Nframe) after which the BS begins to send paging messages. The Paging Interval Length refers to the number of continuous frames (N) starting from Nframe, where N is not Nframe. Namely, the MS can receive the paging messages in N continuous frames starting from Nframe after the paging message occurs. The Paging Interval Length parameter is also determined through negotiation with the network side in the process of registering the MS onto the network.

In the process of the MS entering the idle mode, the Paging Interval Length parameter needs to be transferred and saved into the anchor PC. In the process of the anchor PC initiating paging, this parameter must be transferred to the BS so that the BS can determine the policy of scheduling the paging messages and send paging broadcast messages in the paging interval. If the anchor PC is migrated when the MS is in the idle mode, this parameter also needs to be transferred to the new anchor PC.

For that purpose, the Paging Interval Length parameter needs to be transferred to the current network side during the handover, including the target BS. This parameter is negotiated in the process of registering the MS onto the network. In addition, the BS or serving network that serves the MS when the MS accesses the network may be different from the BS or serving network that serves the MS when the MS enters the idle mode later. Therefore, this parameter must be transferred together with the MS context during the handover of the MS.

Retarding the Paging Cycle Req parameter, it is carried in the DREG_REQ message in the process of the MS entering the idle mode, and serves as a basis for the network side to determine the paging cycle for this MS. Therefore, in the process of the MS entering the idle mode, this parameter needs to be carried to the PC.

Regarding the MAC Hash Skip Threshold parameter, it is a threshold of a number of continuously sent paging messages (MOB-PAG-ADV). If no paging message specific to the MS exists among a set number (threshold) of paging messages that are sent continuously, the PC or BS/PA will send a paging message specific to the MS. Therefore, the MAC Hash Skip Threshold parameter needs to be transferred and saved into the PC so that the PC or BS/PA can handle accordingly in the case that the conditions are fulfilled. This parameter may be determined through negotiation with the network side in the process of registering the MS onto the network, carried in the MS Info Req message or the DREG_REQ message, and hence transferred and stored into the relay PC or anchor PC.

The Idle Mode Timeout, Paging Interval Length, Paging Cycle Req, and MAC Hash Skip Threshold parameters mentioned above can be configured by the network side uniformly, so that they will vary with the terminal. In this case, they are not necessarily transferred in the process of the MS entering the idle mode in an embodiment of the present invention.

Regarding the Paging Preference parameter, every service flow created by the MS has a Paging Preference parameter. If this parameter is set, it means that the network can generate a paging message to page the MS after the MS enters the idle mode if the service flow has an incoming downlink packet; if this parameter is not set, the network will not generate a paging message to page the MS when the service flow has an incoming downlink packet; when a downlink packet of the MS arrives but finds no corresponding service flow, the anchor PC may initiate or may not initiate the paging to the MS according to the presetting.

The information stored in the anchor PC/LR may include the service flow information of the MS for which a Paging Preference parameter is set, and exclude the service flow information for which no Paging Preference parameter is set.

After the MS enters the idle mode, if the 7th bit of the Idle Mode Retain Information parameter is set to I, the network will retain only the service flow information whose Paging Preference is set to 1. For other service flow information, after the MS enters the idle mode, the FA or anchor DPF will delete the service flow information which is not to be retained, and notify the Service Flow Authorization (SFA) entity and the Policy Function (PF) entity to delete and release the service flows.

The previous parameters are also applicable to the following embodiments.

### Embodiment 2

In the previous process of the MS entering the idle mode, the process of storing the MS context information to the anchor PC may be asynchronous to the process of releasing the data path. Namely, the data path may be released after the SBS determines that the MS can enter the idle mode according to the network-side algorithm and obtains the paging parameters. The process of the second embodiment may be replaced with the following process, as shown in Figure 4.

After the PA/SBS receives the DREG_REQ message from the MS, the PA/SBS sends an MS Info Req message to the corresponding relay PC to determine whether the MS can enter the idle mode. After receiving the MS Info Req message, the relay PC allocates a PC ID and paging parameters to the MS. The message carries the MS ID, Idle Mode Retain Information, BS ID, ASN-DPF ID, and anchor authenticator ID, which are MS context information required for the MS to enter the idle mode. Additionally, the PA/SBS sends the previous information to the anchor PC through an FA by means of an MS Info Req message. The anchor PC performs the functions described in the first embodiment above, and replies with an MS Info Req to the PA/SBS. After replying to the MS with a DREG_CMD message, the PA can start the resource retaining timer, and send a Data Path Rel Req to the DPF of the MS link. The Data Path Rel Req carries: MS ID, actual paging parameters (selected PG ID, paging cycle, paging offset, and PC ID), and idle mode authorization indication. The relay DPF on the link forwards the Data Path Rel Req to the anchor DPF/FA; the anchor DPF/FA responds to the Data Path Rel Req, releases the data path, and returns a Data Path Rel Rsp to the PA/BS; after receiving the Data Path Rel Rsp, the PA/BS confirms that the MS enters the idle mode successfully; therefore, the BS/PA sends a Data Path Rel Ack message to the relay PC; the relay PC replies with a Data Path Rel Ack message to the FA, indicating that the MS enters the idle mode successfully; the BS/PA and the relay PC will delete the information related to this MS. Meanwhile, the FA sends an MS Info Ack message to the anchor PC, conforming completion of the MS entering the idle mode. The anchor PC finally finishes data update in the LR.

Alternatively, the BS/PA may send a Data Path Rel Ack message to the relay PC when the resource retaining timer times out; the relay PC replies with a Data Path Rel Ack message to the FA; the BS/PA and the relay PC delete the information related to this MS; and the FA sends an MS Info Ack message to the anchor PC to update the data.

It should be noted that the relay PC is optional in the previous step. If the relay PC does not exist, the BS/PA will communicate with the FA directly.

### Embodiment 3

What is described below is a circumstance that the MS does not enter the idle mode until a period of time expires after the MS sends a request of entering the idle mode.

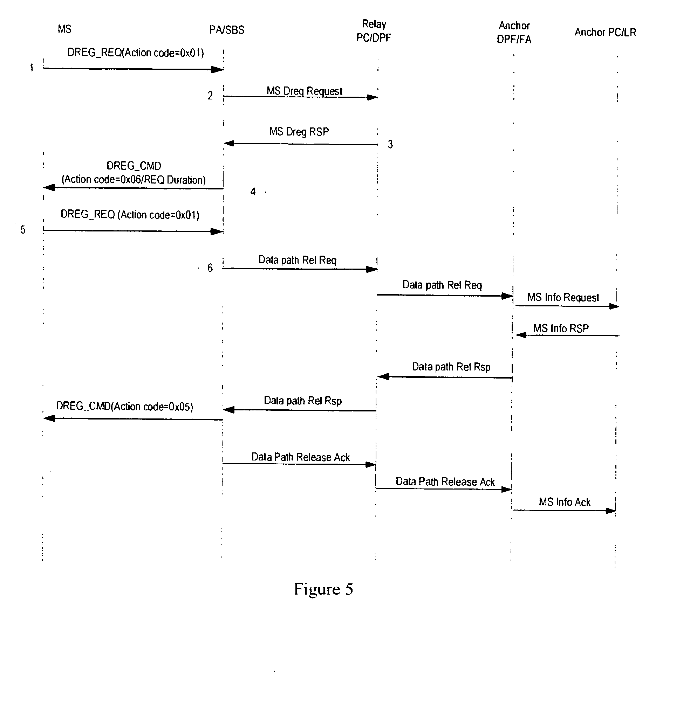

Figure 5 shows the process of entering the idle mode initiated by an MS according to the third embodiment of the present invention. As shown in Figure 5, the process includes the following steps:
(1) when deciding to enter the idle mode, the MS sends a DREG_REQ (deregistration request) message. In the DREG_REQ message, the Action Code is 0x01, indicating the requirement of entering the idle mode. The message format can be defined according to the existing standard;
(2) after receiving the DREG_REQ message, the SBS/PA sends an MS Dreg Req (MS deregistration request) message to its local PC (the local PC that manages the PA), with the message carrying the MS ID, BS ID, PG ID, Idle Mode Retain Information, and so on;
(3) after receiving the MS Dreg Req message, the local PC recommends an anchor PC for the MS, and allocates the recommended paging parameters (including PG ID, Paging Cycle, and Paging Offset) for the MS to enter the idle mode. Meanwhile, the local PC decides whether the MS needs to wait for a period of time before sending a location update request to enter the idle mode. If so, the local PC will put the value of the REQ_duration (request duration) parameter into the message, instructing the MS to send a request of entering the idle mode after expiry of the time duration indicated by the REQ_duration; and then return such information to the SBS/PA through an MS Dreg Rsp message;
(4) after the SBS/PA receives the MS Dreg Rsp message, the SBS/PA will reply to the MS directly with a DREG_CMD message, if the message carries the value of the REQ_duration. The message carries an action code "0x06" (which indicates that the MS will send a DREG_REQ message again upon expiry of the REQ_duration after receiving the message) and the received REQ_duration value. The SBS/PA can also decide at its discretion whether or not the MS must enter the idle mode upon expiry of the REQ_duration. In this step, the DREQ_CMD message carries a REQ_duration parameter. Rather than being started after this DREQ_CMD message is sent out, a resource retaining timer may be started after the DREQ_CMD message is sent again in the subsequent steps; or the resource retaining timer is started after this DREQ_CMD message (carrying REQ_duration) is sent out, and will be restarted after the DREQ_CMD message is sent again in the subsequent steps; and
(5) after the MS receives the DREG_CMD message and a REQ_duration expires, the MS sends a request of entering the idle mode (DREG_REQ) again. In the DREG_REQ message, the Action Code is 0x01; and the message format can be defined according to the existing standard.

Since a request of entering the idle mode is already sent to the local relay PC/DPF in step ②, step ⑤ can be omitted. The BS/PA sends a Data Path Rel Req message to the back-end node directly. The subsequent steps are the same as the counterpart steps in the first embodiment.

### Embodiment 4

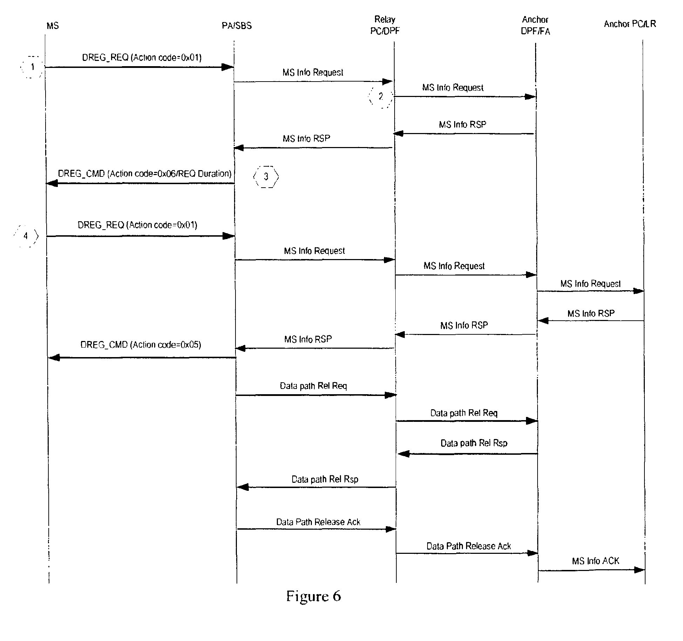

In this embodiment, the process of the MS entering the idle mode and the process of storing the MS context information to the anchor PC are not synchronous to the process of releasing the data path. Namely, the data path may be released after the SBS decides that the MS can enter the idle mode according to the network-side algorithm and obtains the paging parameters. Figure 6 shows the process of entering the idle mode initiated by an MS according to the fourth embodiment of the present invention. As shown in Figure 6, the process is as follows:
the network requires the MS to send a request of entering the idle mode after waiting for a REQ_Duration. Therefore, the FA or relay PC replies to the PA/SBS with an MS Info Rsp message directly, indicating the waiting time of REQ_Duration;
the PA/SBS replies to the MS with a DREG_CMD message;
the message carries the REQ_Duration parameter and the Action Code "0x06"; and
after a REQ_Duration expires, the MS sends a request of entering the idle mode again. The subsequent steps are the same as the counterpart steps in the second embodiment.

Like in the previous embodiments, the anchor PC must record the following information into the context carried in the request of entering the idle mode sent by the MS: ID of the current anchor DPF/FA (which may be IP address of the ASN GW that contains the anchor DPF/FA), and the anchor authenticator ID.

The anchor authenticator of the MS must record the anchor PC ID which exists when the MS is in the idle mode. The anchor PC ID may be recorded when the anchor PC consults the anchor authenticator whether the MS can enter the idle mode; or the anchor PC notifies the anchor PC ID to the anchor authenticator of the MS after confirming that the MS enters the idle mode.

Moreover, the anchor DPF/FA records the anchor PC ID of the MS. For this purpose, the anchor PC may notify the anchor PC ID to the anchor DPF/FA of the MS after confirming that the MS enters the idle mode.

Although the WiMAX system is used as an example in describing the technical solution of the present invention, the technical solution of the present invention is not limited to the WiMAX system, but is applicable to other wireless MANs such as 802.20-based wireless networks.

Through the method for an MS to enter the idle mode in a wireless MAN, the present invention perfects the process of entering the idle mode initiated by the MS, and makes such a process more stable. Moreover, after the MS enters the idle mode, if the anchor PC receives no location update request from the MS before the idle mode timer times out, the anchor PC will initiate paging to the MS, or delete the context information of the MS. Besides, the present invention transfers and stores the paging interval length to the anchor PC, which facilitates the BS to determine the scheduling policy for paging.

It should be appreciated that the previous is only preferred embodiments of the present invention and is not for use in limiting the invention.

## Claims

1. A method for enabling a mobile station, MS, to enter the idle mode in a wireless metropolitan area network, MAN, comprising:
receiving, by a base station/paging agent, BS/PA, a request sent by a mobile station, MS, to request for entering the idle mode;
responding, by the BS/PA, to the request of the MS, and sending, by the BS/PA, an MS information request, MS Info Req, message to an anchor paging controller/location register, PC/LR;
receiving, by the BS/PA, a response message sent by the anchor PC/LR if the network side allows the MS to enter the idle mode, with an idle mode authorization indication and actual paging parameters carried in the response message;
sending, by the BS/PA, a deregistration command, DREG_CMD, message to the MS after receiving the response message; and
sending, by the BS/PA, a data path release request, Data Path Rel Req, to an anchor data path function foreign agent, DPF/FA, entity to release the relevant data path links of the MS.

2. The method of claim 1, wherein:
the anchor DPF/FA of the MS stores the information on the idle mode of the MS, and the information comprises an anchor PC ID of the MS.

3. The method of claim 1, further comprising:
recording, by the anchor DPF/FA, an anchor PC ID of the MS if such ID is carried in the Data Path Rel Req.

4. The method of claim 1, wherein the MS Info Req message carries the MS context information required for the MS to enter the idle mode.

5. The method of claim 1,
wherein if the network side requires the MS to enter the idle mode after waiting for a duration, the sending a DREG_CMD message to the MS comprises: sending, by the BS/PA the DREG_CMD message to the MS, with a REQ_Duration parameter value carried in the message;
wherein after sending the DREG_CMD message to the MS the method further comprises: sending a request of entering the idle mode again upon expiry of the duration indicated by the REQ_duration after the MS receives the DREG_CMD message.

6. The method of claim 1, further comprising:
starting, by the BS/PA, a resource retaining timer after sending the DREG_CMD to the MS, so that the information on the local MS is deleted upon expiry of the resource retaining timer.

7. The method according to any of claim 1 to claim 6, further comprising:
sending, by the BS/PA, the MS Info Req message to the anchor DPF/FA directly or through a relay; and
storing, by the anchor DPF/FA, the information carried in the message, and replying with an MS information response, MS Info Rsp, message to the BS/PA.

8. The method according to any of claim 1 to claim 6, wherein the procedure, in which the BS/PA responds to the request of the MS and sends the MS Info Req message to the anchor PC/LR, comprises:
responding, by the BS/PA, to the request of the MS, and sending the MS Info Req message to a local PC;
specifying, by the local PC, the anchor PC/LR for the MS after receiving the MS Info Req message; recommending paging parameters; and sending the paging parameters to the anchor PC/LR through the anchor DPF/FA.

9. The method according to any of claim 1 to claim 6, wherein:
the request message sent by the MS or BS/PA carries an Idle Mode Timeout parameter, so that the anchor PC/LR determines and starts an Idle Mode System Timer according to the Idle Mode Timeout parameter after the MS enters the idle mode;
upon expiry of the timer, if the anchor PC/LR receives no location update request from the MS, the anchor PC initiates paging to the MS or deletes the context information of the MS directly.

10. The method of claim 1, further comprising:
releasing service flow information in a process of releasing a data link when the request message carries an indication configured to indicate no need of retaining the service flow information of the MS; and
deleting, by an FA, the service flow information and notifying a service flow authorization, SFA, and a policy function, PF, to delete and release the service flows.

11. The method of claim 1, further comprising:
storing, by an anchor authenticator, the information on the idle mode of the MS;
wherein the information comprises an anchor PC ID, and/or an anchor DPF ID, and/or security context information of the MS.

12. The method of claim 1, wherein the procedure, in which the anchor PC/LR sends the response message carrying the idle mode authorization indication and the actual paging parameters to the BS/PA, comprises:
sending, by the anchor PC/LR, a message to an anchor authenticator to obtain an indication as regards whether the MS is allowed to enter the idle mode, with an anchor PC ID of the MS carried in the indication;
recording and storing, by the anchor authenticator, the anchor PC ID.

13. The method of claim 12, wherein:
the anchor PC/LR carries security context information, which needs to be stored when the MS enters the idle mode, to the anchor authenticator for storing.

14. The method of claim 1, wherein:
after the MS enters the idle mode, when downlink service flow of the MS arrives, the anchor PC/LR initiates paging to the MS if the anchor PC/LR stores the corresponding service flow information and a Paging Preference is set for the service flow.

15. A base station, comprising:
means for receiving a request sent by a mobile station, MS, to request for entering the idle mode;
means for responding to the request of the MS, and sending an MS information request, MS Info Req, message to an anchor paging controller/location register, PC/LR;
means for receiving a response message sent by the anchor PC/LR if the network side allows the MS to enter the idle mode, with an idle mode authorization indication and actual paging parameters carried in the response message;
means for sending a deregistration command, DREG_CMD, message to the MS after receiving the response message; and
means for sending a data path release request, Data Path Rel Req, to an anchor data path function, foreign agent, DPF/FA, entity to release the relevant data path links of the MS.

## Patentansprüche

1. Verfahren, um zu ermöglichen, dass eine Mobilstation, MS, in einem drahtlosen Ballungsraumnetz, MAN, in die inaktive Betriebsart eintritt, wobei das Verfahren Folgendes umfasst:
Empfangen einer durch eine Mobilstation, MS, gesendeten Anforderung, um anzufordern, dass in die inaktive Betriebsart eingetreten wird, durch eine Basisstation/einen Funkrufagenten, BS/PA;
Antworten auf die Anforderung der MS durch die BS/den PA und Senden einer MS-Informationsanforderungsnachricht, MS Info Req-Nachricht, an einen Anker-Funkrufcontroller/ein Anker-Ortsregister, einen Anker-PC/ein Anker-LR, durch die BS/den PA;
Empfangen einer durch den Anker-PC/das Anker-LR gesendeten Antwortnachricht mit einer Angabe der Autorisierung der inaktiven Betriebsart und mit gegenwärtigen Funkrufparametern, die in der Antwortnachricht geführt werden, durch die BS/den PA, falls die Netzseite zulässt, dass die MS in die inaktive Betriebsart eintritt;
Senden einer Abmeldebefehlsnachricht, DREG_CMD-Nachricht, an die MS durch die BS/den PA nach Empfang der Antwortnachricht; und
Senden einer Datenwegfreigabeanforderung, Data Path Rel Req-Anforderung, an eine Ankerdatenwegfunktion/Fremdagenten-Entität, DPF/FA-Entität, durch die BS/den PA zum Freigeben der relevanten Datenweg-Übertragungsstrecken der MS.

2. Verfahren nach Anspruch 1, wobei:
die Anker-DPF/der Anker-FA der MS die Informationen über die inaktive Betriebsart der MS speichert und die Informationen eine Anker-PC ID der MS umfassen.

3. Verfahren nach Anspruch 1, das ferner Folgendes umfasst:
Aufzeichnen einer Anker-PC ID der MS durch die Anker-DPF/den Anker-FA, falls diese ID in der Data Path Rel Req geführt wird.

4. Verfahren nach Anspruch 1, wobei die MS Info Req-Nachricht die MS-Kontextinformationen führt, die für die MS zum Eintreten in die inaktive Betriebsart erforderlich sind.

5. Verfahren nach Anspruch 1,
wobei das Senden einer DREG_CMD-Nachricht an die MS, falls die Netzseite fordert, dass die MS in die inaktive Betriebsart eintritt, nachdem sie eine Dauer gewartet hat, Folgendes umfasst: Senden der DREG_CMD-Nachricht an die MS durch die BS/den PA mit einem in der Nachricht geführten REQ_Duration-Parameterwert;
wobei das Verfahren nach dem Senden der DREG_CMD-Nachricht an die MS ferner Folgendes umfasst: erneutes Senden einer Anforderung zum Eintreten in die inaktive Betriebsart bei Ablauf der durch die REQ_duration angegebenen Dauer, nachdem die MS die DREG_CMD-Nachricht empfangen hat.

6. Verfahren nach Anspruch 1, das ferner Folgendes umfasst:
Starten eines Betriebsmittelhaltezeitgebers durch die BS/den PA nach Senden des DREG_CMD an die MS, damit die Informationen über die lokale MS bei Ablauf des Betriebsmittelhaltezeitgebers gelöscht werden.

7. Verfahren nach einem von Anspruch 1 bis Anspruch 6, wobei das Verfahren ferner Folgendes umfasst:
Senden der MS Info Req-Nachricht an die Anker-DPF/den Anker-FA durch die BS/den PA direkt oder über eine Weiterleitung; und
Speichern der in der Nachricht geführten Informationen durch die Anker-DPF/den Anker-FA und Antworten mit einer MS-Informationsantwortnachricht, MS Info Rsp-Nachricht, an die BS/den PA.

8. Verfahren nach einem von Anspruch 1 bis Anspruch 6, wobei die Prozedur, in der die BS/der PA auf die Anforderung der MS antwortet und die MS Info Req-Nachricht an den Anker-PC/das Anker-LR sendet, Folgendes umfasst:
Antworten auf die Anforderung der MS durch die BS/den PA und Senden der MS Info Req-Nachricht an einen lokalen PC;
Spezifizieren des Anker-PC/Anker-LR für die MS durch den lokalen PC nach Empfang der MS Info Req-Nachricht; Empfehlen von Funkrufparametern; und
Senden der Funkrufparameter über die Anker-DPF/den Anker-FA an den Anker-PC/das Anker-LR.

9. Verfahren nach einem von Anspruch 1 bis Anspruch 6, wobei:
die durch die MS oder durch die BS/den PA gesendete Anforderungsnachricht einen Zeitablaufparameter der inaktiven Betriebsart führt, sodass der Anker-PC/das Anker-LR in Übereinstimmung mit dem Zeitablaufparameter der inaktiven Betriebsart einen Systemzeitgeber der inaktiven Betriebsart bestimmt und startet, nachdem die MS in die inaktive Betriebsart eingetreten ist;
der Anker-PC einen Funkruf zu der MS initiiert oder die Kontextinformationen der MS direkt löscht, falls der Anker-PC/das Anker-LR bei Ablauf des Zeitgebers keine Ortsaktualisierungsanforderung von der MS empfängt.

10. Verfahren nach Anspruch 1, das ferner Folgendes umfasst:
Freigeben von Dienstflussinformationen in einem Prozess des Freigebens einer Datenübertragungsstrecke, wenn die Anforderungsnachricht eine Angabe führt, die dafür konfiguriert ist, keine Notwendigkeit, die Dienstflussinformationen der MS zu halten, anzugeben; und
Löschen der Dienstflussinformationen durch einen FA und Mitteilen einer Dienstflussautorisierung, SFA, und einer Richtlinienfunktion, PF, zum Löschen und Freigeben der Dienstflüsse.

11. Verfahren nach Anspruch 1, das ferner Folgendes umfasst:
Speichern der Informationen über die inaktive Betriebsart der MS durch einen Ankerauthentifikator;
wobei die Informationen eine Anker-PC ID und/oder eine Anker-DPF ID und/oder Sicherheitskontextinformationen der MS umfassen.

12. Verfahren nach Anspruch 1, wobei die Prozedur, in der der Anker-PC/das Anker-LR die Antwortnachricht, die die Angabe der Autorisierung der inaktiven Betriebsart und die gegenwärtigen Funkrufparameter führt, an die BS/den PA sendet, Folgendes umfasst:
Senden einer Nachricht an einen Ankerauthentifikator durch den Anker-PC/das Anker-LR, um eine Angabe hinsichtlich dessen zu erhalten, ob die MS in die inaktive Betriebsart eintreten darf, wobei in der Angabe eine Anker-PC ID der MS geführt wird;
Aufzeichnen und Speichern der Anker-PC ID durch den Ankerauthentifikator.

13. Verfahren nach Anspruch 12, wobei:
der Anker-PC/das Anker-LR Sicherheitskontextinformationen führt, die zur Speicherung in dem Ankerauthentifikator gespeichert werden müssen, wenn die MS in die inaktive Betriebsart eintritt.

14. Verfahren nach Anspruch 1, wobei:
der Anker-PC/das Anker-LR einen Funkruf an die MS initiiert, nachdem die MS in die inaktive Betriebsart eingetreten ist, wenn der Abwärtsstreckendienstfluss der MS ankommt, falls der Anker-PC/das Anker-LR die entsprechenden Dienstflussinformationen speichert und eine Funkrufpräferenz für den Dienstfluss eingestellt wird.

15. Basisstation, die Folgendes umfasst:
ein Mittel zum Empfangen einer durch eine Mobilstation, MS, gesendeten Anforderung, um anzufordern, dass in die inaktive Betriebsart eingetreten wird;
ein Mittel zum Antworten auf die Anforderung der MS und zum Senden einer MS-Informationsanforderungsnachricht, MS Info Req-Nachricht, an einen Ankerfunkrufcontroller/ein Anker-Ortsregister, einen Anker-PC/ein Anker-LR;
ein Mittel zum Empfangen einer durch den Anker-PC/das Anker-LR gesendeten Antwortnachricht, falls die Netzseite zulässt, dass die MS in die inaktive Betriebsart eintritt, wobei in der Antwortnachricht eine Angabe der Autorisierung der inaktiven Betriebsart und gegenwärtige Funkrufparameter geführt werden;
ein Mittel zum Senden einer Abmeldebefehlsnachricht, DREG_CMD-Nachricht, an die MS nach Empfang der Antwortnachricht; und
ein Mittel zum Senden einer Datenwegfreigabeanforderung, Data Path Rel Req, an eine Ankerdatenwegfunktion/Fremdagenten-Entität, DPF/FA-Entität, zum Freigeben der relevanten Datenweg-Übertragungsstrecken der MS.

## Revendications

1. Procédé permettant à une station mobile, MS, de passer en mode inactif dans un réseau métropolitain, MAN, sans fil, comprenant :
la réception, par une station de base/agent de recherche, BS/PA, d'une requête envoyée par une station mobile, MS, demandant le passage en mode inactif,
la réponse, par la BS/PA, à la requête de la MS, et l'envoi, par la BS/PA, d'un message de requête d'informations de MS, MS info Req, à un contrôleur de recherche/enregistreur de position, PC/LR, d'ancrage ;
la réception, par la BS/PA, d'un message de réponse envoyé par le PC/LR d'ancrage si le côté réseau permet à la MS de passer en mode inactif, avec une indication d'autorisation de mode inactif et des paramètres effectifs de recherche inclus dans le message de réponse ;
l'envoi, par la BS/PA, d'un message de commande de désenregistrement, DREG_CMD, à la MS après la réception du message de réponse ; et
l'envoi, par la BS/PA, d'une requête de libération de chemin de données, Data Path Rel Req, à une entité à fonction de chemin de données/agent étranger, DPF/FA, d'ancrage, pour libérer les liaisons de chemin de données pertinentes de la MS.

2. Procédé selon la revendication 1, dans lequel :
la DPF/FA d'ancrage de la MS stocke les informations sur le mode inactif de la MS,
et les informations comprennent un ID de PC d'ancrage de la MS.

3. Procédé selon la revendication 1, comprenant en outre :
l'enregistrement, par la DPF/FA d'ancrage, d'un ID de PC d'ancrage de la MS si cet ID est inclus dans la Data Path Rel Req.

4. Procédé selon la revendication 1, dans lequel le message MS Info Req inclut les informations de contexte MS requises pour que la MS passe en mode inactif.

5. Procédé selon la revendication 1,
dans lequel si le côté réseau exige que la MS passe en mode inactif après un certain temps d'attente, l'envoi d'un message DREG_CMD à la MS comprend : l'envoi, par la BS/PA du message DREG_CMD à la MS, une valeur de paramètre de durée de requête REQ_Duration étant incluse dans le message ;
le procédé comprenant en outre : après l'envoi du message DREG_CMD à la MS, l'envoi d'une requête de passage en mode inactif une nouvelle fois à l'expiration de la durée indiquée par REQ_Duration après que la MS reçoit le message DREG_CMD.

6. Procédé selon la revendication 1, comprenant en outre :
le lancement, par la BS/PA, d'une temporisation de conservation de ressource après l'envoi de la DREG_CMD à la MS de telle sorte que les informations sur la MS locale soient supprimées à l'expiration de la temporisation de conservation de ressource.

7. Procédé selon l'une quelconque des revendications 1 à 6, comprenant en outre :
l'envoi, par la BS/PA, du message MS Info Req à la DPF/FA d'ancrage directement ou par le biais d'un relais ; et
le stockage, par la DPF/FA d'ancrage, des informations incluses dans le message, et la réponse avec un message de réponse d'informations de MS, MS Info Rsp, à la BS/PA.

8. Procédé selon l'une quelconque des revendications 1 à 6, dans lequel la procédure, dans laquelle la BS/PA répond à la requête de la MS et envoie le message MS Info Req au PC/LR d'ancrage, comprend :
la réponse, par la BS/PA, à la requête de la MS, et l'envoi du message MS Info Req à un PC local ;
la spécification, par le PC local, du PC/LR d'ancrage de la MS après la réception du message MS Info Req ; la recommandation de paramètres de recherche ; et l'envoi des paramètres de recherche au PC/LR d'ancrage par le biais de la DPF/FA d'ancrage.

9. Procédé selon l'une quelconque des revendications 1 à 6, dans lequel :
le message de requête envoyé par la MS ou la BS/PA inclut un paramètre de Fin de Mode Inactif, de telle sorte que le PC/LR d'ancrage détermine et lance une Temporisation de Système de Mode Inactif en fonction du paramètre de Fin de Mode Inactif après que la MS passe en mode inactif ;
à l'expiration de la temporisation, si le PC/LR d'ancrage ne reçoit pas de requête d'actualisation de position depuis la MS, le PC d'ancrage lance la recherche auprès de la MS ou supprime les informations de contexte de la MS directement.

10. Procédé selon la revendication 1, comprenant en outre :
la libération d'informations de flux de service dans un processus de libération de liaison de données quand le message de requête inclut une indication configurée pour indiquer que la conservation des informations de flux de service de la MS est inutile ; et
la suppression, par un FA, des informations de flux de service et la notification à une autorisation de flux de service, SFA, et une fonction de stratégie, PF, de supprimer et de libérer les flux de service.

11. Procédé selon la revendication 1, comprenant en outre :
le stockage, par un authentificateur d'ancrage, des informations sur le mode inactif de la MS ;
dans lequel les informations comprennent un ID de PC d'ancrage, et/ou un ID de DPF d'ancrage et/ou des informations de contexte de sécurité de la MS.

12. Procédé selon la revendication 1, dans lequel la procédure, dans laquelle le PC/LR d'ancrage envoie le message de réponse incluant l'indication d'autorisation de mode inactif et les paramètres de recherche effectifs à la BS/PA comprend :
l'envoi, par le PC/LR d'ancrage, d'un message à un authentificateur d'ancrage pour obtenir une indication sur l'autorisation ou non de la MS à passer en mode inactif, un ID de PC d'ancrage de la MS étant inclus dans l'indication :
l'enregistrement et le stockage, par l'authentificateur d'ancrage, de l'ID de PC d'ancrage.

13. Procédé selon la revendication 12, dans lequel :
le PC/LR d'ancrage inclut des informations de contexte de sécurité, lesquelles doivent être stockées quand la MS passe en mode inactif, dans l'authentificateur d'ancrage en vue de leur stockage.

14. Procédé selon la revendication 1, dans lequel :
après que la MS passe en mode inactif, quand le flux de service de liaison descendante de la MS arrive, le PC/LR d'ancrage lance la recherche auprès de la MS si le PC/LR d'ancrage stocke les informations de flux de service correspondantes et
une Préférence de Recherche est établie pour le flux de service.

15. Station de base, comprenant :
un moyen de réception d'une requête envoyée par une station mobile, MS, demandant le passage en mode inactif,
un moyen de réponse à la requête de la MS, et d'envoi d'un message de requête d'informations de MS, MS info Req, à un contrôleur de recherche/enregistreur de position, PC/LR, d'ancrage ;
un moyen de réception d'un message de réponse envoyé par le PC/LR d'ancrage si le côté réseau permet à la MS de passer en mode inactif, avec une indication d'autorisation de mode inactif et des paramètres effectifs de recherche inclus dans le message de réponse ;
un moyen d'envoi d'un message de commande de désenregistrement, DREG_CMD, à la MS après la réception du message de réponse ; et
un moyen d'envoi d'une requête de libération de chemin de données, Data Path Rel Req, à une entité à fonction de chemin de données/agent étranger, DPF/FA d'ancrage, pour libérer les liaisons de chemin de données pertinentes de la MS.
